# EUROPÄISCHE PATENTSCHRIFT

(11) **EP 3 017 323 B1**
(45) Veröffentlichungstag und Bekanntmachung des Hinweises auf die Patenterteilung: **20.07.2022**
(21) Anmeldenummer: 14736681.9
(22) Anmeldetag: 26.06.2014
(51) Int. Cl.: G01V 3/12, G01S 13/74

(54) **VERFAHREN UND VORRICHTUNGEN ZUR BESTIMMUNG DER ENTFERNUNG EINES OBJEKTES**
METHOD AND DEVICES FOR DETERMINING THE DISTANCE OF AN OBJECT
PROCÉDÉ ET DISPOSITIFS POUR MESURER L'ÉLOIGNEMENT D'UN OBJET

(30) Priorität: 05.07.2013 DE 102013011220
(43) Veröffentlichungstag der Anmeldung: 11.05.2016
(73) Patentinhaber: Rheinmetall Waffe Munition GmbH, 29345 Südheide (DE)
(72) Erfinder: SCHMITZ, Jürgen, 38518 Gifhorn (DE); JUNG, Markus, 29358 Eicklingen (DE); CAMP, Michael, 29221 Celle (DE); GRAF, Alexander, 29525 Uelzen (DE); DUDEK, Ellen, 90552 Röthenbach (DE)
(74) Vertreter: DREISS Patentanwälte PartG mbB
(86) Internationale Anmeldenummer: PCT/EP2014/063516
(87) Internationale Veröffentlichungsnummer: WO 2015/000784

(56) Entgegenhaltungen:
- DE-A1-102006 038 627
- DE-U1-202008 000 995
- US-A- 3 732 567
- US-A- 3 781 879
- US-A- 6 040 796
- US-B1- 7 639 178

## Beschreibung

Die Erfindung betrifft ein Verfahren zur Bestimmung der Entfernung eines Objektes, das mindestens ein nichtlineares Bauelement, insbesondere Halbleiterbauelement, enthält, welches bei Bestrahlung mit einem hochfrequenten Sendesignal ein Objektsignal mit der doppelten und/oder dreifachen Frequenz des Sendesignales erzeugt und wieder abstrahlt. Die Erfindung bezieht sich ferner auf Vorrichtungen zur Durchführung eines derartigen Verfahrens.

Aus der DE 10 2006 038 627 A1 ist es bekannt, elektronische Bauelemente, wie sie bei Zündeinrichtungen von Bomben verwendet werden, mit Hilfe eines Detektors zum Aufspüren nichtlinearer Übergänge von Grenzschichten, insbesondere der p-n-Übergänge von Halbleiterbauelementen (Dioden, Transistoren etc.), zu ermitteln. Die Arbeitsweise dieser beispielsweise auch in der WO 02/065419 A1 beschriebenen und als NLJ-Detektoren bezeichneten Detektoren (NLJ-Detektor: Non-Linear Junction-Detektor) besteht darin, dass ein primäres Hochfrequenzsignal von einer mit einem Hochfrequenzsender verbundenen Sendeantenne auf den zu untersuchenden Gegenstand gestrahlt wird. Sind in dem Gegenstand beispielsweise Halbleiterbauelemente vorhanden, so induziert die primäre Hochfrequenzstrahlung eine Spannung an den p-n-Übergängen des entsprechenden Halbleiterbauelementes, der wie ein stromdurchflossener Leiter wirkt und somit ein eigenes elektromagnetisches Feld induziert, dessen zweite und/oder dritte Oberwellen (sekundäre Hochfrequenzstrahlung) wiederum über eine Empfangsantenne von einer Empfangs- und Auswerteeinheit empfangen und ausgewertet werden.

Mit diesen bekannten Verfahren und Vorrichtungen ist es bisher lediglich möglich, das Vorhandensein von Grenzschichtübergängen sowie durch entsprechende Ausrichtung der Sende- und/oder Empfangsantenne die Richtung der Objekte zu ermitteln.

Die DE 20 2008 000 995 U1 offenbart eine Schleuse zur Detektion von Halbleiterübergängen. Hierbei werden die Halbleiterübergänge mittels Hochfrequenzimpulsen in den Gegenständen bestrahlt und durch die reflektierenden Oberwellen der bestrahlte Gegenstand festgestellt und die Reflexion gemessen und ausgewertet. Eine Entfernungsmessung ist nicht angedacht.

Insbesondere, wenn Gebiete auf Sprengfallen untersucht werden sollen, die einen größeren Abstand von dem NLJ-Detektor besitzen (beispielsweise die Überprüfung der Umgebung einer Straße von einem gepanzerten Fahrzeug aus), ist es erforderlich, auch die Entfernung der Sprengfalle von dem Detektor zu kennen, um gegebenenfalls Maßnahmen zur Entschärfung oder Vernichtung der entsprechenden Sprengfalle einleiten zu können.

Die US 3,732,567 A offenbart eine Vorrichtung zum Lokalisieren elektrisch nichtlinearer Objekte. Die Vorrichtung sendet ein Anregungssignal aus, das, wenn es von einer elektrisch nichtlinearen Verbindung reflektiert wird, eine elektromagnetische Welle erzeugt, die eine höhere Harmonische als die Anregungswelle hat. Die Vorrichtung kann das Signal einer höheren Harmonischen empfangen und beide Signale miteinander vergleichen. Das zusammengesetzte Signal weist eine Amplitude auf, die proportional zum Abstand des nichtlinearen Objekts ist und zur Entfernungsmessung herangezogen wird. Die verwendete Technik ist derjenigen ähnlich, die bei der CW-FM-Radarhöhenmessung verwendet wird.

Die US 3,781,879 A offenbart ein Radarsystem für Kraftfahrzeuge. Bei herkömmlichen Radaranlagen zur Erfassung und Entfernungsmessung hat ein vom Ziel reflektierte Empfangssignal im Wesentlichen die gleiche Frequenz wie das Sendesignal. Wenn zwei oder mehrere Radarziele gleiche Größe und gleiche Geschwindigkeit haben, ergeben sich weitere Schwierigkeiten. Diese Nachteile werden durch ein auf Oberwellen ansprechendes Erfassungs- und Entfernungsmessungsradar beseitigt. Eine Antenne ist so ausgelegt, dass sie einen polarisierten Strahl elektromagnetischer Energie in eine gegebene Richtung sendet. Eine weitere Antenne ist so ausgelegt, dass sie einen polarisierten Strahl elektromagnetischer Energie aus einer gegebenen Richtung auffängt. Das Radarziel enthält eine Empfangs- und Richtantenne. Der Ausgang der Antenne ist mit einem Oberwellengenerator gekoppelt, der ein passives nichtlineares Element aufweist. Das Ausgangsignal des Oberwellengenerators enthält Komponenten der Grundfrequenz des Strahls sowie Oberwellen dieser Grundfrequenz. Ein Filter gibt diese Oberwelle an eine Richtantenne weiter, die so ausgelegt ist, dass sie einen polarisierten Strahl zum Radarsystem zurücksenden kann. Das Ziel stellt somit einen rückweisenden passiven Reflektor dar.

Der Erfindung liegt daher die Aufgabe zugrunde, ein Verfahren zur Bestimmung der Entfernung von Objekten mit mindestens einem nichtlinearen Bauelement anzugeben, welches bei Bestrahlung mit einem hochfrequenten Sendesignal ein Objektsignal mit der doppelten oder dreifachen Frequenz des Sendesignales erzeugt.

Diese Aufgabe wird erfindungsgemäß hinsichtlich des Verfahrens durch die Merkmale der nebengeordneten Ansprüche 1 und 2 und hinsichtlich der Vorrichtungen durch die nebengeordneten Ansprüche 6 und 7 gelöst. Weitere, besonders vorteilhafte Ausgestaltungen der Erfindung offenbaren die Unteransprüche.

Die Erfindung beruht im Wesentlichen auf dem Gedanken, das nichtlineare Bauelement bzw. die nichtlinearen Bauelemente mit Hilfe eines einfachen bzw. vereinfachten Messaufbaus zu betrachten. Zur Entfernungsermittlung von Objekten mit nichtlinearen Bauelementen wird ein modifiziertes Sekundärradarprinzip herangezogen. Dabei antwortet das Objekt auf das empfangene Sendesignal mit dem Aussenden eines von dem Sperrschichtübergang durch das Sendesignal induzierten Objektsignales mit der doppelten oder dreifachen Frequenz des Sendesignales.

Im einfachsten Fall kann zur Entfernungsmessung eine Zeitdifferenzmessung Δt zwischen dem Aussenden eines impulsförmigen Sendesignales und dem Empfang des induzierten impulsförmigen Objektsignales herangezogen werden, wobei die Entfernung R zwischen der entsprechenden Vorrichtung und dem Objekt dann aus der Beziehung: R = 1/2_{*}c_{*}Δt ermittelbar ist, und wobei c die Lichtgeschwindigkeit bedeutet.

Die Entfernungsmessung kann aber auch durch Bestrahlung des Objektes mittels eines frequenzmodulierten, kontinuierlichen Sendesignales (FMCW-Verfahren) erfolgen, wobei zur Entfernungsmessung die Frequenzdifferenz zwischen der Frequenz des empfangenen Objektsignales und der Frequenz des (korrigierten) aktuellen Sendesignales oder zwischen der Frequenz des (korrigierten) Objektsignales und der Frequenz des aktuellen Sendesignales herangezogen wird.

Bei der Modulation kann es sich beispielsweise sowohl um eine lineare Frequenzmodulation des Sendesignales mit sägezahnförmigem oder dreiecksförmigem Verlauf oder um eine Modulation mit rechteckförmigem Modulationsspannungsverlauf handeln.

Weitere Einzelheiten und Vorteile der Erfindung ergeben sich aus den folgenden, anhand von Figuren erläuterten Ausführungsbeispielen. Es zeigen:
- Fig.1: ein vereinfachtes Blockschaltbild zur Ermittlung der Entfernung eines Objektes mit Hilfe hochfrequenter impulsförmiger Sendesignale, wobei die durch ein nichtlineares Bauelement induzierten impulsförmigen Objektsignale, deren Frequenz der zweiten Harmonischen des Sendesignales entsprechen, zur Entfernungsmessung herangezogen werden;
- Fig.2: eine Ansicht der in Fig.1 zur Entfernungsmessung verwendeten impulsförmigen Hochfrequenzsignale;
- Fig.3: die Darstellung der Frequenzverläufe eines korrigierten Sendesignales und eines Objektsignales im Falle einer dreieckförmigen Frequenzmodulation;
- Fig.4: ein vereinfachtes Blockschaltbild zur Ermittlung der Entfernung des Objektes durch Signalverarbeitung der in Fig.3 dargestellten Frequenzverläufe;
- Fig.5: die Darstellung der Frequenzverläufe eines korrigierten Sendesignales und eines Objektsignales im Falle einer rechteckförmigen Frequenzmodulation.

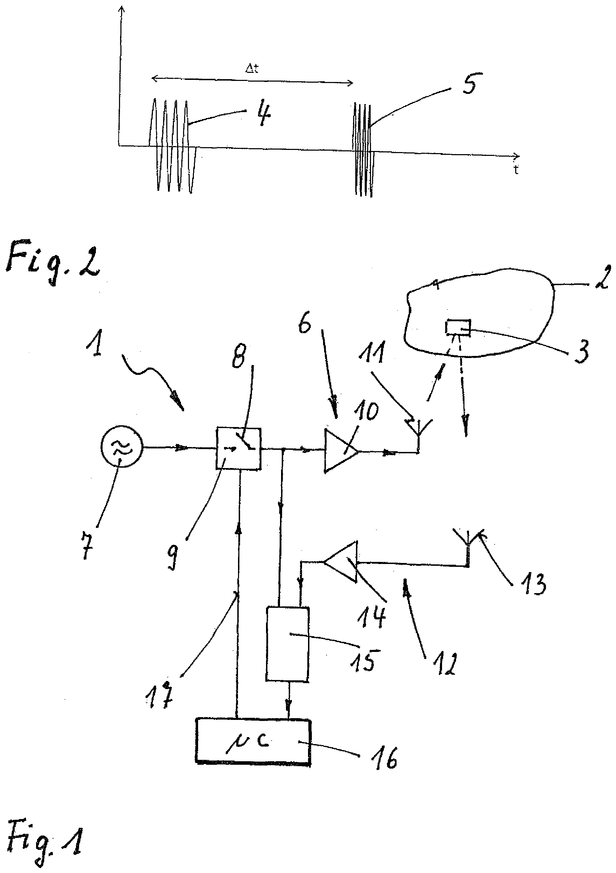

In Fig.1 ist mit 1 eine Vorrichtung zur Bestimmung der Entfernung eines Objektes 2, das mindestens ein nichtlineares Bauelement 3, insbesondere Halbleiterbauelement, enthält, welches bei Bestrahlung mit einem hochfrequenten Sendesignal 4 (Fig.2) ein Objektsignal 5 mit der doppelten Frequenz des Sendesignales 4 erzeugt und wieder abstrahlt.

Die Vorrichtung 1 umfasst eine Sendeeinrichtung 6 zur Erzeugung der impulsförmigen, hochfrequenten Sendesignale 4. Hierzu ist ein Hochfrequenzoszillator 7 über einen, einen elektronischen Schalter 8 enthaltenden Amplitudenmodulator 9 und einen Leistungsverstärker 10 mit einer Sendeantenne 11 verbunden.

Außerdem weist die Vorrichtung 1 eine Empfangseinrichtung 12 zum Empfang der Objektsignale 5 auf. Diese besteht im Wesentlichen aus einer Empfangsantenne 13, einem rauscharmen Verstärker 14 und einem Zähler 15, der sowohl mit dem Verstärker 14 als auch mit der Sendeeinrichtung 6 verbunden ist. Der Ausgang des Zählers 15 ist mit einer einen Mikrocomputer umfassenden Auswerte- und Steuereinheit 16 verbunden. Diese Auswerte- und Steuereinheit 16 steht außerdem über eine elektrische Leitung 17 mit dem Amplitudenmodulator 9 in Verbindung.

Soll nun die Entfernung von der Vorrichtung 1 zu dem Objekt 2 ermittelt werden, so bewirkt die Auswerte- und Steuereinheit 16 ein Schließen des elektronischen Schalters 8 des Amplitudenmodulators 9 während einer vorgegebenen Zeitdauer. Während dieser Zeitdauer wird ein impulsförmiges Sendesignal 4 von der Sendeantenne 11 abgestrahlt und gelangt zu dem nichtlinearen Bauelement 3 des Objektes 2. Gleichzeitig wird der Zähler 15 aktiviert und beginnt mit einer vorgegebenen Taktfrequenz zu zählen.

Empfängt die Empfangseinrichtung 12 nun ein Objektsignal 5, so bewirkt der entsprechend verstärkte Empfangsimpuls ein Beenden des Zählvorganges des Zählers 15. Von dem Ausgang des Zählers 15 kann die Auswerte- und Steuereinheit 16 ein Signal abrufen, welches der Zeitdifferenz Δt zwischen dem Aussenden des Sendesignales 4 und dem Empfang des Objektsignales 5 entspricht und kann daraus die Entfernung aus der Beziehung: R = ½ _{*} c _{*} Δt berechnen.

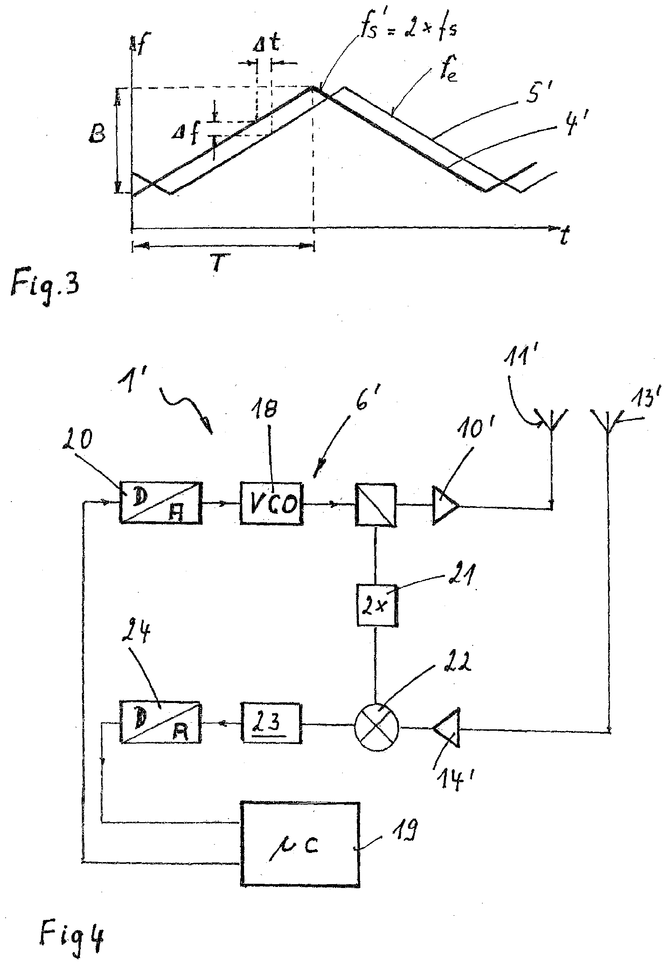

Zur Bestimmung der Entfernung eines Objektes mit mindestens einem nichtlinearen Bauelement können aber auch Vorrichtungen verwendet werden, bei denen die Objekte mit hochfrequenten, frequenzmodulierten Sendesignalen (FMCW) bestrahlt werden. Dieses wird nachfolgend mit Hilfe der Fig.3 und 4 für den Fall einer dreieckförmigen (d.h. einer linearen) Frequenzmodulation näher erläutert. Dabei wurde angenommen, dass die Entfernung zwischen der Messvorrichtung und dem Objekt im Wesentlichen konstant bleibt und daher Dopplerfrequenzen nicht berücksichtigt werden müssen. Außerdem sollen nur Objektsignale weiterverarbeitet werden, deren Frequenz der zweiten Harmonischen der Frequenz des Sendesignales entsprechen.

In Fig.3 sind sowohl ein von dem Frequenzverlauf fs des Sendesignales abhängiger Frequenzverlauf fs' (fs'= 2 _{*} fs) eines entsprechend korrigierten Sendesignales 4' mit der Frequenzbandbreite B und der Rampendauer T, als auch der aufgrund der Entfernung zwischen Vorrichtung und Objekt sich ergebende zeitversetzte Frequenzverlauf fe des Objektsignales 5' dargestellt. Dabei ist die Frequenzdifferenz Δf zwischen korrigiertem Sendesignal 4' und Objektsignal 5' zu jedem Zeitpunkt ein Maß für die Zeitdifferenz Δt zwischen dem Aussenden des Sendesignales 4' und dem Empfang des Objektsignales 5' und damit für die Entfernung.

Die in Fig.4 dargestellte Vorrichtung 1' zur Bestimmung der Entfernung des entsprechenden Objektes (nicht dargestellt) umfasst eine Sendeeinrichtung 6' mit einem spannungsgesteuerten Oszillator (VCO) 18. Dieser wird von einem als Rampengenerator wirkenden Mikrocomputer 19 mit nachgeschaltetem D/A-Wandler 20 gespeist. Das Ausgangssignal des Oszillators 18 wird teilweise über einen Leistungsverstärker 10' und eine Sendeantenne 11' abgestrahlt und gelangt teilweise nach Passieren eines Frequenzverdopplers 21 als korrigiertes Sendesignal 4' zu einer Mischstufe 22.

Die von dem nichtlinearen Bauelement des Objektes abgestrahlten Objektsignale 5' gelangen über eine Empfangsantenne 13' in eine Empfangseinrichtung 12' der Vorrichtung 1' und werden dort über einen rauscharmen Verstärker 14' ebenfalls der Mischstufe 22 zugeführt.

Je nach Wahl der Frequenzbandbreite B und der Rampendauer T ergibt sich ein für die Frequenzdifferenz Δf (Fig.3) charakteristisches Signal, welches über einen Zwischenfrequenzverstärker 23 und einen A/D-Wandler 24 dem Mikrocomputer 19 zugeführt wird und von diesem ausgewertet werden kann (R = ½ T/B_{*}c_{*}Δf ).

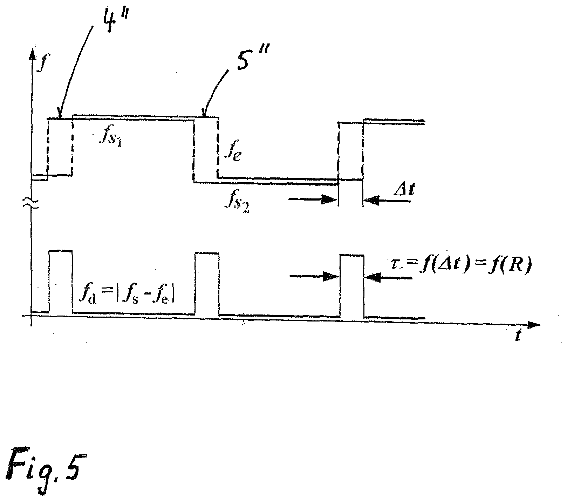

In Fig.5 sind die Frequenzverläufe eines korrigierten Sendesignales 4" und eines Objektsignales 5" im Falle einer rechteckförmigen Frequenzmodulation wiedergegeben, die auch als Frequenzumtastung oder FSK (FSK = Frequency Shift Keying) bezeichnet wird. Hierbei springt das korrigierte Sendesignal 4" periodisch zwischen zwei Sendefrequenzen fs1' (=2 _{*} fs1) und fs2' (= 2 _{*} fs2) hin und her, wobei fs1 und fs2 die Sendefrequenzen des nicht korrigierten Sendesignales bedeuten. Ab dem Frequenzsprung des korrigierten Sendesignales 4" wird die Laufzeit gemessen, bis dieser Frequenzsprung im empfangenen Objektsignal 5" registriert wird. Daraus wird dann wie bei dem oben erwähnten Impulsverfahren die Entfernung R zum Objekt bestimmt (R = ½_{*}c_{*}τ, wobei τ = f(Δt) ist).

Die Erfindung ist selbstverständlich nicht auf die vorstehend beschriebenen Ausführungsbeispiele beschränkt. So kann zum Frequenzvergleich zwischen der Objektfrequenz und der aktuellen Sendefrequenz statt einer Korrektur (Verdopplung oder Verdreifachung) der Sendefrequenz auch eine Korrektur der Empfangsfrequenz (Teilung um den Faktor zwei oder drei) erfolgen.

Statt einer Dreiecksmodulation kann die Frequenz des Sendesignales beispielsweise auch mit einem sägezahnförmigen Spannungssignal moduliert werden.

Ferner ist es nicht zwingend erforderlich, dass getrennte Sende- und Empfangsantennen verwendet werden. Vielmehr können diese Antennen auch durch eine einzige, entsprechend breitbandige Antenne ersetzt werden.

Außerdem kann beim Vorhandensein mehrerer nichtlinearer Bauelementen in einem Objekt, dessen Entfernung gemessen werden soll, eine Verzerrung der Objektsignale auftreten. Somit ändert sich je nach Bauteil die ermittelte Entfernung, die in einem Postprocessingschritt korrigiert/kalibriert werden muss. Dazu dient eine mögliche Klassifikation über die Betragsgänge der beiden Harmonischen. Klassifikation heißt, dass ein unbekanntes Bauteil mit einer vorhandenen Datenbank verglichen wird. Erfolgt über diverse Suchverfahren/Ähnlichkeitsverfahren eine Übereinstimmung mit hoher Wahrscheinlichkeit, kann ein Kalibrations-/Korrekturverfahren eingeführt und die Entfernungsbestimmung korrigiert werden.

### Bezugszeichenliste

- 1,1': Vorrichtungen
- 2: Objekt
- 3: Bauelement
- 4: Sendesignal
- 4',4": korrigierte Sendesignale
- 5,5',5": Objektsignale
- 6,6': Sendeeinrichtungen
- 7: Hochfrequenzoszillator
- 8: elektronischer Schalter
- 9: Amplitudenmodulator
- 10,10': Leistungsverstärker
- 11,11': Sendeantennen
- 12,12': Empfangseinrichtungen
- 13,13': Empfangsantennen
- 14,14': Verstärker
- 15: Zähler
- 16: Auswerte- und Steuereinheit
- 17: Leitung
- 18: Oszillator
- 19: Mikrocomputer
- 20: D/A-Wandler
- 21: Frequenzverdoppler
- 22: Mischstufe
- 23: Zwischenfrequenzverstärker
- 24: A/D-Wandler
- B: Frequenzbandbreite
- R: Abstand zum Objekt
- T: Rampendauer
- fe: Frequenz des Objektsignales
- fs: Frequenz des Sendesignales
- fs': Frequenz des korrigierten Sendesignales (= 2_{*}fs)
- Δf: Frequenzdifferenz zwischen empfangenem Objektsignal und aktuellem Sendesignal
- Δt: Zeitdifferenz zwischen Abstrahlung des Sendesignales und Empfang des Objektsignales

## Patentansprüche

1. Verfahren zur Bestimmung der Entfernung eines Objektes (2), das mindestens ein nichtlineares Bauelement (3), insbesondere Halbleiterbauelement, enthält, welches bei Bestrahlung mit einem hochfrequenten Sendesignal (4) ein Objektsignal (5-5") mit der doppelten und/oder dreifachen Frequenz des Sendesignales (4) erzeugt und wieder abstrahlt, mit den Merkmalen:
a) das Objekt (2) wird mit einem impulsförmigen Sendesignal (4) bestrahlt, und die durch die nichtlinearen Bauelemente (3) induzierten impulsförmigen Objektsignale (5) mit der doppelten und/oder dreifachen Frequenz des Sendesignales (4) werden empfangen;
b) anschließend wird die Zeitdifferenz (Δt) zwischen dem Aussenden des impulsförmigen Sendesignales (4) und dem Empfang des Objektsignales (5) ermittelt und hieraus die Entfernung zu dem Objekt (2) bestimmt.

2. Verfahren zur Bestimmung der Entfernung eines Objektes (2), das mindestens ein nichtlineares Bauelement (3), insbesondere Halbleiterbauelement, enthält, welches bei Bestrahlung mit einem hochfrequenten Sendesignal (4) ein Objektsignal (5-5") mit der doppelten und/oder dreifachen Frequenz des Sendesignales (4) erzeugt und wieder abstrahlt, mit den Merkmalen:
a) das Objekt (2) wird mit einem periodisch frequenzmodulierten Sendesignal bestrahlt, und die durch die nichtlinearen Bauelemente induzierten Objektsignale (5'; 5") werden mit der doppelten und/oder dreifachen Frequenz des Sendesignales empfangen;
b) anschließend wird die Frequenzdifferenz (Δf) zwischen der Frequenz (fe) des empfangenen Objektsignales (5'; 5") und der, je nach empfangenen Harmonischen, um den Faktor zwei oder drei erhöhten Frequenz (fs) des sich beim Empfang des Objektsignales ergebenden aktuellen korrigierten Sendesignales (4'; 4") ermittelt und hieraus die Entfernung zu dem Objekt (2) bestimmt.

3. Verfahren nach Anspruch 2, **dadurch gekennzeichnet, dass** zum Frequenzvergleich zwischen der Frequenz (fe) des Objektsignales und der Frequenz (fs') des aktuellen korrigierten Sendesignales (4') statt einer Verdopplung oder Verdreifachung der Sendefrequenz (fs) eine Korrektur der Frequenz (fe) des Objektsignales um den Faktor zwei oder drei erfolgt.

4. Verfahren nach Anspruch 2 oder 3, **dadurch gekennzeichnet, dass** als Sendesignal ein linear-frequenzmoduliertes Sendesignal verwendet wird.

5. Verfahren nach Anspruch 2 oder 3, **dadurch gekennzeichnet, dass** als Sendesignal ein durch Frequenzumtastung moduliertes Sendesignal verwendet wird.

6. Vorrichtung zur Bestimmung der Entfernung eines Objektes (2), das mindestens ein nichtlineares Bauelement (3), insbesondere Halbleiterbauelement, enthält, welches bei Bestrahlung mit einem hochfrequenten Sendesignal (4) ein Objektsignal (5-5") mit der doppelten und/oder dreifachen Frequenz (fs) des Sendesignales (4) erzeugt und wieder abstrahlt, mit den Merkmalen:
a) die Vorrichtung (1) umfasst eine Sendeeinrichtung (6) zur Erzeugung impulsförmiger, hochfrequenter Sendesignale (4), eine Empfangseinrichtung (12) zum Empfang von Objektsignalen (5), deren Frequenz (fe) dem zwei- und/oder dreifachen der Frequenz (fs) der Sendesignale (4) entspricht, und mindestens eine Sendeantenne (11) zur Ausstrahlung der Sendesignale (4) sowie mindestens eine Empfangsantenne (13) zum Empfang der Objektsignale (5);
b) die Sendeeinrichtung (6) und die Empfangseinrichtung (12) sind mit einer Schaltungseinrichtung zur Bestimmung der Zeitdifferenz (Δt) zwischen dem Aussenden eines impulsförmigen Sendesignales (4) und dem Empfang des durch dieses Sendesignal (4) induzierten Objektsignales (5) sowie zur Ermittlung der Entfernung (R) des Objektes (2) aus der bestimmten Zeitdifferenz (Δt) verbunden.

7. Vorrichtung zur Bestimmung der Entfernung eines Objektes (2), das mindestens ein nichtlineares Bauelement (3), insbesondere Halbleiterbauelement, enthält, welches bei Bestrahlung mit einem hochfrequenten Sendesignal (4) ein Objektsignal (5-5") mit der doppelten und/oder dreifachen Frequenz (fs) des Sendesignales (4) erzeugt und wieder abstrahlt, mit den Merkmalen:
a) die Vorrichtung (1') umfasst eine Sendeeinrichtung (6') zur Erzeugung hochfrequenter, periodisch frequenzmodulierter Sendesignale, eine Empfangseinrichtung (12') zum Empfang von Objektsignalen (5'; 5"), deren Frequenz dem zwei- und/oder dreifachen der Frequenz (fs) der Sendesignale entspricht, und mindestens eine Sendeantenne (11') zur Ausstrahlung der Sendesignale sowie eine Empfangsantenne (13') zum Empfang der Objektsignale (5'),
b) die Sendeeinrichtung und die Empfangseinrichtung sind mit einer Schaltungseinrichtung verbunden, mittels welcher die Frequenzdifferenz (Δf) zwischen der Frequenz (fe) des empfangenen Objektsignales (5'; 5") und der, je nach empfangenen Harmonischen, um den Faktor zwei oder drei erhöhten Frequenz (fs) des sich beim Empfang des Objektsignales (5'; 5") ergebenden aktuellen Sendesignales erfolgt, und
c) der Schaltungseinrichtung ist ein Mikrocomputer (19) nachgeschaltet, mittels welcher aus der besagten Frequenzdifferenz (Δf) die Entfernung des Objektes (2) bestimmbar ist.

8. Vorrichtung nach Anspruch 7, **dadurch gekennzeichnet, dass** die Vorrichtung derart aufgebaut ist, dass zum Frequenzvergleich zwischen der Objektfrequenz (fe) und der aktuellen Sendefrequenz (fs) statt einer Verdopplung oder Verdreifachung der Sendefrequenz (fs) eine Teilung der Empfangsfrequenz (fe) um den Faktor zwei oder drei erfolgt.

9. Vorrichtung nach Anspruch 7 oder 8, **dadurch gekennzeichnet, dass** die Sendeeinrichtung (6') einen spannungsgesteuerten Oszillator (18) umfasst, der mittels einer sägezahnförmigen oder dreieckförmigen Modulationsspannung modulierbar ist.

10. Vorrichtung nach Anspruch 7 oder 8, **dadurch gekennzeichnet, dass** die Sendeeinrichtung (6') einen spannungsgesteuerten Oszillator (18) umfasst, der mittels einer rechteckförmigen Modulationsspannung modulierbar ist.

## Claims

1. Method for determining the distance of an object (2) which contains at least one non-linear component (3), in particular a semiconductor component, and which, when irradiated with a high-frequency transmission signal (4), generates and re-emits an object signal (5-5") having double and/or triple the frequency of the transmission signal (4), the method comprising the features:
a) the object (2) is irradiated with a pulsed transmission signal (4), and the pulsed object signals (5) which are induced by the non-linear component (3) and have double and/or triple the frequency of the transmission signal (4) are received;
b) the time difference (Δt) between the transmission of the pulsed transmission signal (4) and the reception of the object signal (5) is then detected and the distance to the object (2) is determined therefrom.

2. Method for determining the distance of an object (2) which contains at least one non-linear component (3), in particular a semiconductor component, and which, when irradiated with a high-frequency transmission signal (4), generates and re-emits an object signal (5-5") having double and/or triple the frequency of the transmission signal (4), the method comprising the features:
a) the object (2) is irradiated with a periodically frequency-modulated transmission signal, and the object signals (5'; 5") which are induced by the non-linear component and have double and/or triple the frequency of the transmission signal are received;
b) the frequency difference (Δf) is then detected between the frequency (fe) of the received object signal (5'; 5") and the frequency (fs) of the current corrected transmission signal (4'; 4") that is produced when the object signal is received, which frequency of the current corrected transmission signal is increased by the factor of two or three depending on the received harmonic, and the distance to the object (2) is determined therefrom.

3. Method according to claim 2, **characterized in that**, for the frequency comparison between the frequency (fe) of the object signal and the frequency (fs') of the current corrected transmission signal (4'), the frequency (fe) of the object signal is corrected by the factor of two or three, instead of the transmitting frequency (fs) being doubled or tripled.

4. Method according to claim 2 or claim 3, **characterized in that** a linear frequency-modulated transmission signal is used as the transmission signal.

5. Method according to claim 2 or claim 3, **characterized in that** a transmission signal modulated by frequency shift keying is used as the transmission signal.

6. Device for determining the distance of an object (2) which contains at least one non-linear component (3), in particular a semiconductor component, and which, when irradiated with a high-frequency transmission signal (4), generates and re-emits an object signal (5-5") having double and/or triple the frequency (fs) of the transmission signal (4), the device comprising the features:
a) the device (1) comprises a transmission device (6) for generating pulsed, high-frequency transmission signals (4), a receiving device (12) for receiving object signals (5), the frequency (fe) of which corresponds to double and/or triple the frequency (fs) of the transmission signals (4), and at least one transmission antenna (11) for emitting the transmission signals (4) and at least one receiving antenna (13) for receiving the object signals (5);
b) the transmitting device (6) and the receiving device (12) are connected to a circuit device for determining the time difference (Δt) between the transmission of a pulsed transmission signal (4) and the reception of the object signal (5) induced by this transmission signal (4) and for ascertaining the distance (R) of the object (2) from the determined time difference (Δt).

7. Device for determining the distance of an object (2) which contains at least one non-linear component (3), in particular a semiconductor component, and which, when irradiated with a high-frequency transmission signal (4), generates and re-emits an object signal (5-5") having double and/or triple the frequency (fs) of the transmission signal (4), the device comprising the features:
a) the device (1') comprises a transmission device (6') for generating high-frequency, periodically frequency-modulated transmission signals, a receiving device (12') for receiving object signals (5'; 5"), the frequency of which corresponds to double and/or triple the frequency (fs) of the transmission signals, and at least one transmission antenna (11') for emitting the transmission signals and at least one receiving antenna (13') for receiving the object signals (5'),
b) the transmission device and the receiving device are connected to a circuit device, by means of which circuit device the frequency difference (Δf) is detected between the frequency (fe) of the received object signal (5'; 5") and the frequency (fs) of the current transmission signal that is produced when the object signal (5'; 5") is received, which frequency of the current transmission signal is increased by the factor of two or three depending on the received harmonic, and
c) a microcomputer (19) is connected downstream of the circuit device, by means of which microcomputer the distance of the object (2) can be determined from said frequency difference (Δf).

8. Device according to claim 7, **characterized in that** the device is designed in such a way that, for the frequency comparison between the object frequency (fe) and the current transmitting frequency (fs), the receiving frequency (fe) is divided by the factor of two or three, instead of the transmitting frequency (fs) being doubled or tripled.

9. Device according to claim 7 or claim 8, **characterized in that** the transmission device (6') comprises a voltage-controlled oscillator (18) which can be modulated by means of a sawtooth or triangular modulation voltage.

10. Device according to claim 7 or claim 8, **characterized in that** the transmission device (6') comprises a voltage-controlled oscillator (18) which can be modulated by means of a square-wave modulation voltage.

## Revendications

1. Procédé de détermination de la distance d'un objet (2) qui contient au moins un composant non linéaire (3), en particulier un composant semi-conducteur, qui, lorsqu'il est irradié avec un signal d'émission à haute fréquence (4), génère un signal d'objet (5-5") ayant le double et/ou le triple de la fréquence du signal d'émission (4) et l'émet à nouveau, comprenant les caractéristiques:
a) l'objet (2) est irradié avec un signal d'émission pulsé (4), et les signaux d'objet pulsés (5) induits par les composants non linéaires (3) et ayant le double et/ou le triple de la fréquence du signal de transmission (4) sont reçus;
b) ensuite, la différence de temps (Δt) entre l'émission du signal d'émission pulsé (4) et la réception du signal d'objet (5) est déterminée, et la distance par rapport à l'objet (2) est déterminée à partir de celle-ci.

2. Procédé de détermination de la distance d'un objet (2) qui contient au moins un composant non linéaire (3), en particulier un composant semi-conducteur, qui, lorsqu'il est irradié avec un signal d'émission à haute fréquence (4), génère un signal d'objet (5-5") ayant le double et/ou le triple de la fréquence du signal d'émission (4) et l'émet à nouveau, comprenant les caractéristiques:
a) l'objet (2) est irradié avec un signal d'émission modulé périodiquement en fréquence, et les signaux d'objet (5'; 5") induits par les composants non linéaires sont reçus à deux et/ou trois fois la fréquence du signal d'émission;
b) puis, la différence de fréquence (Δf) entre la fréquence (fe) du signal d'objet (5'; 5") reçu et la fréquence (fs) qui est augmentée d'un facteur de deux ou trois selon les harmoniques reçues, du signal d'émission actuel corrigé (4'; 4") résultant lors de la réception du signal d'objet est déterminée, et la distance par rapport à l'objet (2) est déterminée à partir de celle-ci.

3. Procédé selon la revendication 2, **caractérisé par le fait que**, pour la comparaison de fréquence entre la fréquence (fe) du signal d'objet et la fréquence (fs') du signal d'émission actuel corrigé (4'), on procède à une correction de la fréquence (fe) du signal d'objet par un facteur de deux ou trois au lieu de doubler ou de tripler la fréquence d'émission (fs).

4. Procédé selon la revendication 2 ou 3, **caractérisé par le fait qu'**un signal d'émission modulé en fréquence de façon linéaire est utilisé en tant que signal d'émission.

5. Procédé selon la revendication 2 ou 3, **caractérisé par le fait qu'**un signal d'émission modulé par modulation par déplacement de fréquence est utilisé en tant que signal d'émission.

6. Dispositif de détermination de la distance d'un objet (2) qui contient au moins un composant non linéaire (3), en particulier un composant semi-conducteur, qui, lorsqu'il est irradié avec un signal d'émission à haute fréquence (4), génère un signal d'objet (5-5") ayant le double et/ou le triple de la fréquence (fs) du signal d'émission (4) et l'émet à nouveau, comprenant les caractéristiques:
a) le dispositif (1) comprend un dispositif d'émission (6) destiné à générer des signaux d'émission pulsés à haute fréquence (4), un dispositif de réception (12) destiné à recevoir des signaux d'objet (5) dont la fréquence (fe) correspond au double et/ou au triple de la fréquence (fs) des signaux d'émission (4), et au moins une antenne émettrice (11) destinée à émettre les signaux d'émission (4) ainsi qu'au moins une antenne réceptrice (13) destinée à recevoir les signaux d'objet (5);
b) le dispositif d'émission (6) et le dispositif de réception (12) sont reliés à un dispositif de circuit pour déterminer la différence de temps (Δt) entre l'émission d'un signal d'émission pulsé (4) et la réception du signal d'objet (5) induit par ce signal d'émission (4) ainsi que pour déterminer la distance (R) de l'objet (2) à partir de la différence de temps (Δt) déterminée.

7. Dispositif de détermination de la distance d'un objet (2) qui contient au moins un composant non linéaire (3), en particulier un composant semi-conducteur, qui, lorsqu'il est irradié avec un signal d'émission à haute fréquence (4), génère un signal d'objet (5-5") ayant le double et/ou le triple de la fréquence (fs) du signal d'émission (4) et l'émet à nouveau, comprenant les caractéristiques:
a) le dispositif (1') comprend un dispositif d'émission (6') destiné à générer des signaux d'émission à haute fréquence modulés périodiquement en fréquence, un dispositif de réception (12') destiné à recevoir des signaux d'objet (5'; 5") dont la fréquence correspond au double et/ou au triple de la fréquence (fs) des signaux d'émission, et au moins une antenne émettrice (11') destinée à émettre les signaux d'émission ainsi qu'une antenne réceptrice (13') destinée à recevoir les signaux d'objet (5),
b) le dispositif d'émission et le dispositif de réception sont reliés à un dispositif de circuit au moyen duquel la différence de fréquence (Δf) entre la fréquence (fe) du signal d'objet (5'; 5") reçu et la fréquence (fs) qui est augmentée d'un facteur de deux ou trois selon les harmoniques reçues, du signal d'émission actuel corrigé résultant lors de la réception du signal d'objet (5'; 5") est déterminée, et
c) un micro-ordinateur (19) est monté en aval du dispositif de circuit au moyen duquel la distance de l'objet (2) peut être déterminée à partir de ladite différence de fréquence (Δf).

8. Dispositif selon la revendication 7, **caractérisé par le fait que** le dispositif est conçu de telle manière que, pour la comparaison de fréquence entre la fréquence d'objet (fe) et la fréquence d'émission actuel (fs), on procède à une division de la fréquence de réception (fe) par le facteur de deux ou trois au lieu de doubler ou de tripler la fréquence d'émission (fs).

9. Dispositif selon la revendication 7 ou 8, **caractérisé par le fait que** le dispositif d'émission (6') comprend un oscillateur (18) commandé en tension qui est modulable au moyen d'une tension de modulation en dent de scie ou triangulaire.

10. Dispositif selon la revendication 7 ou 8, **caractérisé par le fait que** le dispositif d'émission (6') comprend un oscillateur (18) commandé en tension qui est modulable au moyen d'une tension de modulation en créneau.
